# EUROPÄISCHE PATENTSCHRIFT

(11) **EP 0 864 053 B1**
(45) Veröffentlichungstag und Bekanntmachung des Hinweises auf die Patenterteilung: **11.07.2001**
(21) Anmeldenummer: 96938184.7
(22) Anmeldetag: 12.11.1996
(51) Int. Cl.: F16D 65/12

(54) **SCHEIBEN-NABENVERBINDUNG, INSBESONDERE FÜR NUTZFAHRZEUG-SCHEIBENBREMSEN**
DISC-HUB CONNECTION, IN PARTICULAR FOR UTILITY VEHICLE DISC BRAKES
JONCTION DISQUE-MOYEU, EN PARTICULIER POUR FREINS A DISQUE DE VEHICULE UTILITAIRE

(30) Priorität: 30.11.1995 DE 19544559
(43) Veröffentlichungstag der Anmeldung: 16.09.1998
(73) Patentinhaber: KNORR-BREMSE Systeme für Nutzfahrzeuge GmbH, 80809 München (DE)
(72) Erfinder: KÜHNE, Victor, D-86720 Nördlingen (DE); BIEKER, Dieter, D-83080 Oberaudorf (DE)
(86) Internationale Anmeldenummer: EP9604948
(87) Internationale Veröffentlichungsnummer: WO9720151

(56) Entgegenhaltungen:
- EP-A- 0 062 774
- EP-A- 0 065 312
- EP-A- 0 127 932
- EP-A- 0 235 382
- EP-A- 0 474 877
- EP-A- 0 589 408
- DE-A- 3 436 729
- GB-A- 2 228 053

## Beschreibung

Die Erfindung betrifft eine Scheiben-/Nabenverbindung.

Scheiben-/Nabenverbindungen für Scheibenbremsen von Kraftfahrzeugen werden nach dem Stand der Technik entweder einstückig - d.h. Scheibe und Nabensatz bestehen z.B. aus einem Guß - oder - siehe z.B. die gattungsgemäße DE 34 41 304 - zweistückig ausgeführt. Die einteiligen Konstruktionen eignen sich aufgrund von Dehnungs- und Rißproblemen infolge der starken Erhitzung der Scheiben während des Bremsens in erster Linie für leichtere Kraftfahrzeuge. Da es in den letzten. Jahren aber einen immer stärkeren Trends zum Einsatz von Scheibenbremsen auch bei schweren Nutzfahrzeugen gibt, ergibt sich der Bedarf nach einer Scheibenkonstruktion, die auch den hohen, bei Bremsungen schwerer Nutzfahrzeuge auftretenden, Belastungen sicher gewachsen ist. Aufgrund der geringeren Neigung zur Rißbildung wird dabei in neuerer Zeit die zweiteilige Variante favorisiert: erste Versuche zur Adaptierung der aus der DE 34 41 304 bekannten Technik (mit dem Problem schlechter Belüftung und Kühlung) auf den Nutzfahrzeugbereich sind z.B. aus der WO93/14947 bekannt. Die dort gezeigte Scheibe ist allerdings fertigungstechnisch nur mit verhältnismäßig hohem Kostenaufwand realisierbar.

Neben den hohen Anforderungen an die Rißstabilität ergibt sich bei Scheiben-/Nabenverbindungen für Nutzfahrzeuge die Notwendigkeit, mit dem knappen zur Verfügungs stehenden Bauraum auszukommen, d.h., im Idealfall sollte eine zweiteilige Ausführung nicht mehr Bauraum beanspruchen als die entsprechende einstückige Variante.

Aus der DE 34 36 729 ist als nächstkommender Stand der Technik eine Scheiben-/Nabenverbindung zur Verbindung einer Bremsscheibe mit einer Nabe, insbesondere für Krane verschiedener Art, bekannt, deren Bremsscheibe im inneren Umfangsbereich mit halbkreisartigen Bohrungen bzw. Ausnehmungen versehen ist, so daß zwischen den Bohrungen "Abstützelemente" gebildet werden, die die radial nach innen vorstehen. Die Nabe ist an ihrem Außenumfang ebenfalls mit halbkreisartigen Ausnehmungen versehen, so daß die Nabe am äußeren Umfangsbereich "Nocken" aufweist, die radial nach außen vorstehen. Dabei dienen Zwischenelemente in folgender Weise zur Drehmomentübertragung zwischen Nabe und Scheibe: werden Nabe und Scheibe zusammengesetzt (z.B. durch Aufschrumpfen der Scheibe auf die Nabe), liegen sich die halbkreisförmigen Ausnehmungen von Nabe und Scheibe jeweils gegenüber, so daß zwischen Nabe und Scheibe kreisförmige Ausnehmungen entstehen. In diese Ausnehmungen werden Hülsen eingesetzt, die axial mit Schrauben und Scheiben gesichert sind. Auf diese Weise ist es zwar möglich, teilweise die durch Temperaturunterschiede zwischen Nabe und Scheibe entstehenden Überbeanspruchungen auszuschließen, die Montage der Scheibe bleibt jedoch relativ kompliziert. Auch eignet sich die Lösung kaum zur Übertragung der bei schnelleren Nutzfahrzeugen auftretenden hohen Bremskräfte.

Die Erfindung zielt gegenüber diesem Stand der Technik darauf ab, eine Naben/Scheibenverbindung zu schaffen, die eine sichere Kraftübertragung zwischen Nabe und Scheibe gewährleistet und auch bei beengtem Einbauraum einfach montierbar ist.

Die Erfindung erreicht dieses Ziel durch den Gegenstand des Anspruches 1. Die Erfindung realisiert eine Scheiben-/Nabenverbindung, bei der die Drehmomentübertragung zwischen Scheibe und Nabe bei Bremsungen aus der Vorwärts- und der Rückwärtsfahrt stets voll gewährleistet ist und bei der infolge der Entkopplung von Scheibe und Nabe Rißbildungen infolge der Erwärmung der Scheibe beim Bremsvorgang sicher verhindert werden. Darüberhinaus wird eine kostengünstige Scheiben-/Nabenverbindung realisiert, deren Bestandteile auch ohne hochpräzise Fertigungstoleranzen herstellbar sind und die einfach und schnell zusammen montiert werden können. Ein weiterer Vorteil der Erfindung ist darin zu sehen, daß mit ihr das Einbaumaß des Scheiben-/Nabenkomplexes gegenüber einer einstückigen Variante nicht vergrößert wird.

Zwar ist der Einsatz von Zusatzelementen zwischen Scheibe und Nabe, die auch zur Drehmomentübertragung zwischen Bremsscheibe und Bremsnabe beitragen, grundsätzlich bekannt (z.3. aus der die Schienenfahrzeugtechnik betreffenden DE OS 38 14 614). Im Bereich der Schienenfahrzeugtechnik sind die Bremsmomente infolge des deutlich geringeren Kraftschlusses zwischen Rad und Schiene jedoch weit geringer als im Nutzfahrzeugbereich, so daß bei einer mehrteiligen Ausführung von Nabe und Scheibe auch die die Scheibe und die Nabe verbindenden Bolzen zur Übertragung des Drehmomentes beitragen können. U.a. aus diesem Grund werden bei der Bremsscheibe der DE OS 38 14 614 auch lediglich drei Gleitstein-Zwischenelemente eingesetzt. Im Gegensatz dazu ermöglicht es die vorliegende Erfindung infolge des Eingriffs der Nocken der Nabe in das Zwischenelement, auch größere Drehmomente sicher und ohne Bruchgefahr zu übertragen. Das Zwischenelement realisiert einen Form- und Kraftschluß, der eine uneingeschränkte sichere Übertragung der während der Bremsvorgänge auftretenden Kräfte und Momente zwischen Scheibe und Nabe erlaubt.

Eine bevorzugte Variante der Erfindung zeichnet sich dadurch aus, daß die Zwischenelemente in die Abstützelemente eingreifen und in Umfangsrichtung formschlüssig an den Abstützelementen abgestützt sind. Die derart realisierte Variante der Erfindung optimiert die Drehmomentübertragung von der Nabe auf die Scheibe bei gleichzeitiger Miminierung des benötigten Bauraumes weiter, denn Nocken, Zwischenelemente und Radnabenansatz greifen jeweils in besonders raumsparender Weise ineinander.

Bei einer weiteren besonders bevorzugten Ausführungsform der Erfindung weisen die Zwischenelemente seitliche Vorsprünge auf, die sich in axialer Richtung Richtung an den Abstützelementen abstützen. Die Abstützelemente übernehmen damit in vorteilhafter Weise neben der Aufgabe der Drehmomentübertragung in radialer Richtung auch die notwendige axiale Fixierung der Scheibe auf der Nabe.

Ein weiterer Vorteil der Erfindung ergibt sich aus der Tatsache, daß es aufgrund des Zwischenstückes möglich ist, die Abstützflächen derart auszulegen, daß Nabe und Scheibe aus unterschiedlichen Materialien gefertigt werden können, was zu weiteren Gewichts- und Kostenersparnissen führt.

Weitere vorteilhafte Varianten der Erfindung sind den übrigen Unteransprüchen zu entnehmen.

Nachfolgend wird die Erfindung unter Bezug auf die Zeichnung näher beschrieben. Es zeigt:
Fig. 1 eine Draufsicht auf eine erfindungsgemäße Scheiben-/Nabenverbindung;
Fig. 2 eine Schnittansicht längs der Linie B-B aus Fig.1;

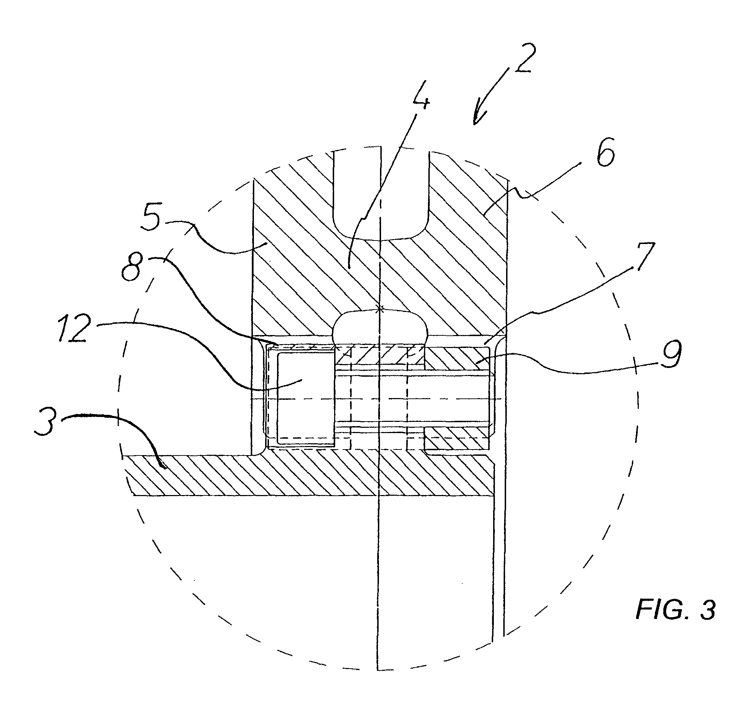

Fig. 3 eine Ausschnittsvergrößerung aus Fig. 2;
Fig. 4 eine Schnittansicht längs der Linie A-A aus Fig. 1;
Fig. 5 eine Fig. 4 entsprechende Schnittansicht einer weiteren Ausführungsform der Erfindung;
Fig. 6a - c eine Draufsicht und Schnittansichten eines weiteren Ausführungsbeispiels der Erfindung.

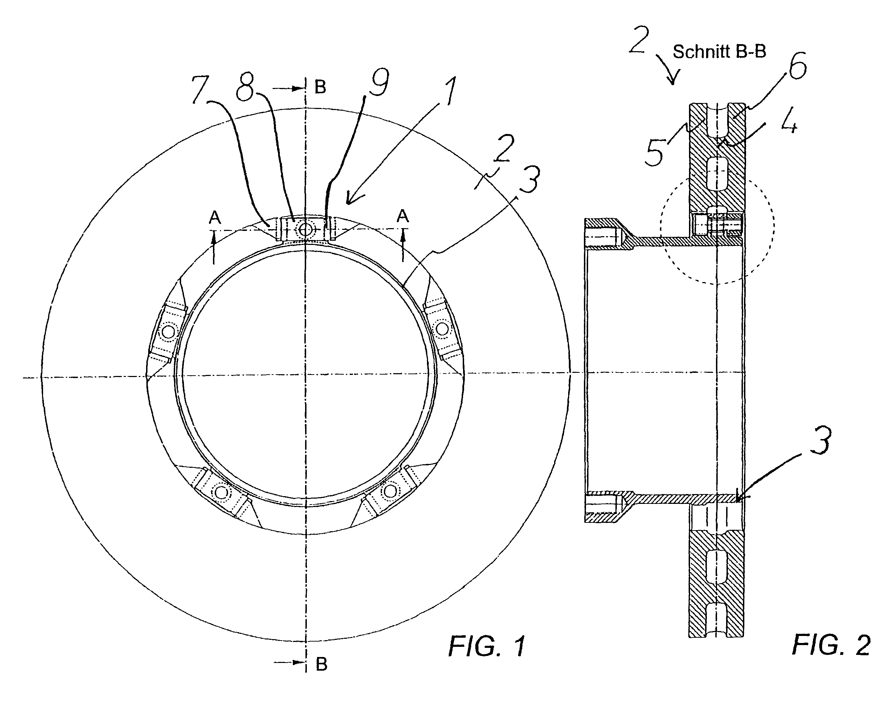

Zunächst sei das Ausführungsbeispiel aus Fig. 1 beschrieben.

Fig. 1 zeigt eine erfindungsgemäße Scheiben-/Nabenverbindung 1 zur Verbindung einer Bremsscheibe 2 mit einer Nabe 3 für eine (nicht dargestellte) Nutzfahrzeug-Scheibenbremse.

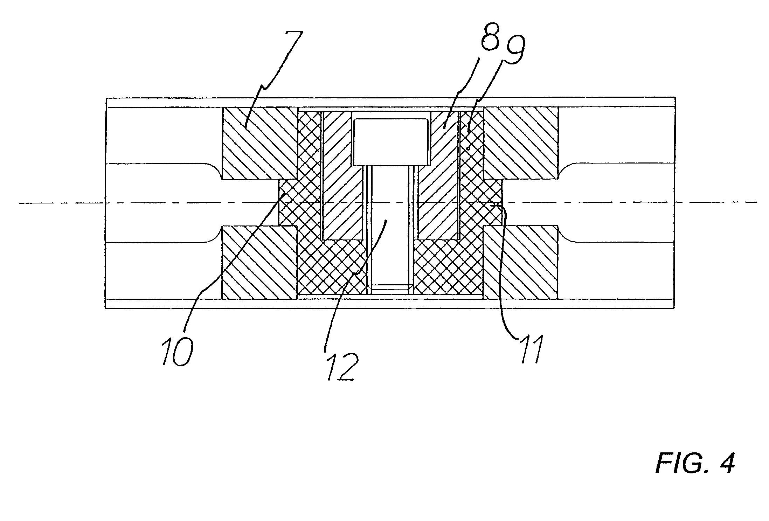

Wie in Fig. 2 zu erkennen, weist die Bremsscheibe 2 zwei über Stege 4 miteinander verbundene Reibflächen 5, 6 auf, wobei - siehe hierzu Fig. 1 und 4 - an die Reibflächen 5, 6 im inneren Umfangsbereich jeweils nach innen hin Paare von Abstützelementen 7 angeformt sind.

Die Scheibennabe 3 (hier ein zylindrischer, rohrartiger Abschnitt, auf dessen eines Ende die Scheibe 2 aufgesetzt wird und dessen anderes Ende auf die eigentliche Radnabe schraubbar ist) ist an ihrem äußeren Umfang mit Nocken 8 versehen, die jeweils radial nach außen vorragen; die Nocken 8 greifen in Zwischen- bzw. Kraftübertragungselemente 9 ein. Die Zwischenelemente 9 sind wiederum in beiden Umfangsrichtungen formschlüssig an jeweils einem Paar der Abstützelemente 7 abgestützt, was in beiden Drehrichtungen eine sichere Drehmomentübertragung von der Scheibe über das Zwischenelement 9 auf die Nabe 3 gewährleistet. Insbesondere wird die Drehmomentübertragung sowohl bei Bremsungen aus der Vorwärtsfahrt als auch bei Bremsungen aus der Rückwärtsfahrt gewährleistet. Die Seitenflächen der Abstützelemente 7 sind an ihren den Nocken 8 zugewandten Seiten parallel zur Radialen der Scheibe ausgerichtet, während die von den Nocken abgewandten Außenseiten der Abstützelemente 7 zur Erhöhung der Bruchsicherheit stark geneigt zur Radialen verlaufen. Bei dem Ausführungsbeispiel der Fig.1 sind insgesamt fünf Doppelpaare der Abstützelemente 7 und fünf der Nocken 8 vorgesehen, die jeweils um 72 ° zueinander versetzt angeordnet sind.

Zur axialen Sicherung sind an die Zwischenelemente seitliche Vorsprünge 10, 11 angeformt, die in Umfangsrichtung zwischen die jeweils paarweise zusammengehörigen Abstützlelemente 7 der Reibflächen 5, 6 greifen, so daß die Sicherung der Verbindung zwischen Nabe 3 und Scheibe 2 auch in den beiden axialen Richtungen gegenüber dem Stand der Technik deutlich verbessert wird.

Bei der Montage werden zunächst die Zwischenelemente 7 von innen her radial nach außen in die Scheibe 2 geschoben. Die derart präparierte Scheibe 2 wird dann seitlich auf die Nabe 3 gesetzt, so daß die Nocken 8 der Nabe 3 in die Zwischenelemente 9 greifen. Zu axialen Fixierung werden Nocken 8 und die im wesentlichen U-Förmigen Zwischenelemente 9 jeweils über einen Schraubbolzen 12 miteinder verbunden. Die Abstützelemente 7 sind dadurch lediglich in radialer Richtung nach außen relativ zu den Zwischenelementen 9 verschiebbar, wobei die Abstützbereiche zwischen Abstützelement 7 und Zwischenelement 9 flächenförmig ausgebildet sind. Die Zwischenelemente 9 weisen entsprechend in ihrem inneren Bereich Abstützflächen auf, an denen sich die Nocken 8 der Nabe 3 in Umfangsrichtung abstützen. Durch die radiale Verschiebbarkeit der Zwischenelemente 9 gegenüber der Scheibe 2 werden Rißbildungen der Scheibe 2 sicher verhindert.

Die Zwischenelemente 9 werden bevorzugt aus einem einem hochfesten Material mit einer niedrigen Wärmeleitfähigkeit gefertigt (z.B: Keramik oder ein weniger gut wärmeleitender Stahl). Durch ihren einfachen Aufbau ist es sogar möglich, die Zwischenelemente so auszubilden, daß sie als Abschnitt einer Profilstange gefertigt werden können.

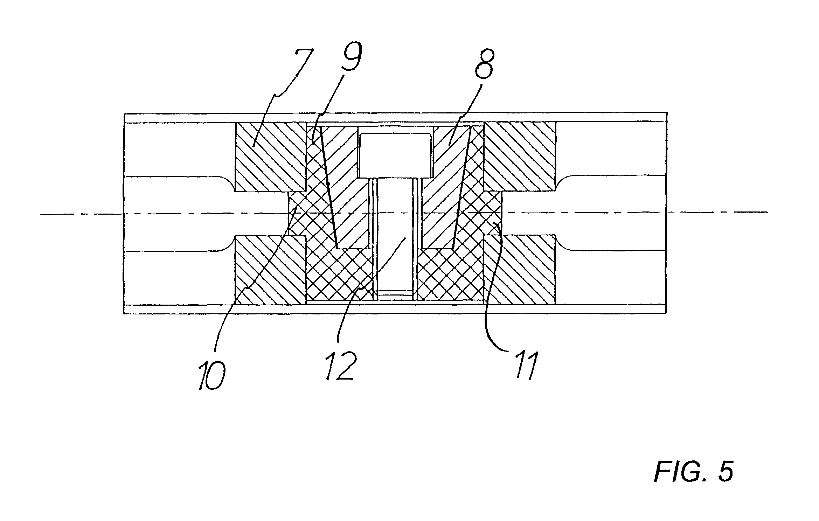

Bei einer weiteren - in Fig. 5 gezeigten - Ausführungsform der Erfindung sind die Abstützflächen des Zwischenelementes 9 konisch ausgebildet, was die Demontage auch nach langem Betrieb unter rauhen Bedingungen sicher gewährleistet.

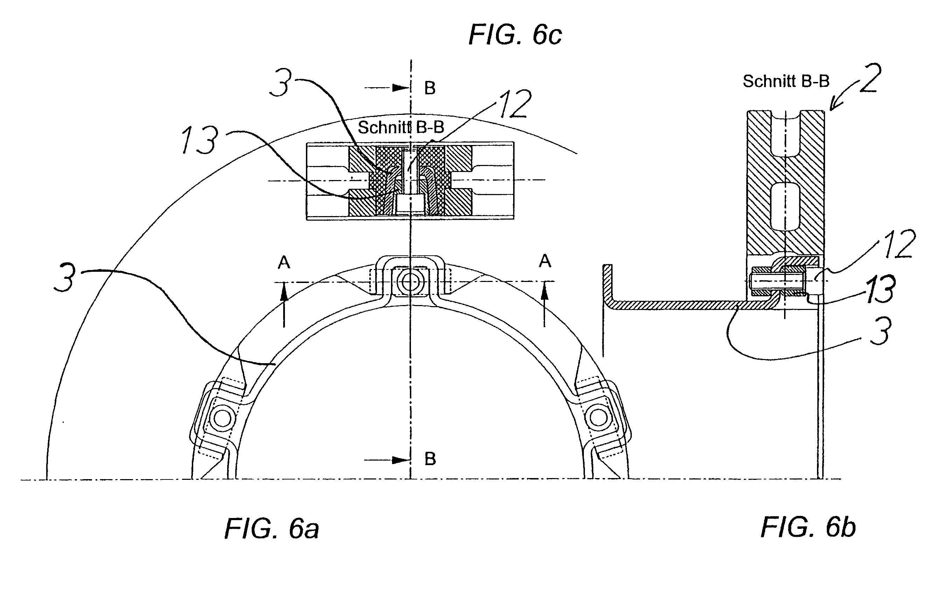

Fig. 6 zeigt ein weiteres Ausführungsbeispiel der Erfindung, bei dem die Nabe 3 als kostengünstiges Tiefziehteil ausgeführt ist. Hier zeigt sich ein weiterer wesentlicher Vorteil der Erfindung, mit der Scheibe 2 und Nabe 3 nicht - wie sonst üblich - jeweils aus Grauguß sondern aus verschiedenen Materialien gefertigt werden können. Dies ist u.a. möglich, da es das nichtelastische Zwischenelement (das z.B. aus einem hochfesten Stahl gefertigt wird) erlaubt, die zur Kraftübertragung nötigen Flächen so auszulegen, daß auch ein Übergang von einem minderwertigeren Material (z.B. der Nabe) zu einem höherwertigen Material (in diesem Fall der Scheibe) realisierbar wird. Zur Verbindung von Nabe 3 und Bolzen 12 sowie ggf. auch zur zusätzlichen Abstützung der Nabe 3 ist bei dem Ausführungsbeispiel der Fig. 6a-c in die Nabe 3 ein zusätzliches Einsatzstück 13 eingesetzt. Vorteile der Ausführung als Tiefziehnabe liegen in einer weiteren Kosten- und Gewichtsersparnis gegenüber einer Gußnabe.

## Patentansprüche

1. Scheiben-/Nabenverbindung (1) zur Verbindung einer Bremsscheibe (2) mit einer Nabe (3), insbesondere für Nutzfahrzeug-Scheibenbremsen, wobei
a) die Bremsscheibe (2) im inneren Umfangsbereich Abstützelemente (7) aufweist, die radial nach innen vorstehen,
b) die Nabe (3) am äußeren Umfangsbereich Nocken (8) aufweist, die radial nach außen vorstehen, und wobei
c) Zwischenelemente (9) zur Drehmoment- und Kraftübertragung von den Nocken (8) der Nabe (3) auf die Abstützelemente (7) der Scheibe (2) derart ausgestaltet sind, daß die Nocken (8) der Nabe (3) in die Zwischenelemente (9) eingreifen.

2. Scheiben-/Nabenverbindung nach Anspruch 1, dadurch gekennzeichnet, daß die Zwischenelemente (9) in die Abstützelemente (7) eingreifen und in Umfangsrichtung formschlüssig an den Abstützelementen (7) abgestützt sind.

3. Scheiben-/Nabenverbindung nach Anspruch 1 oder 2, dadurch gekennzeichnet, daß die Nocken (8) mit den Zwischenelementen (7) form- und/oder kraftschlüssig verbunden sind.

4. Scheiben-/Nabenverbindung nach einem der vorstehenden Ansprüche, dadurch gekennzeichnet, daß die Zwischenelemente (9) seitliche Vorsprünge (10, 11) aufweisen, die sich in axialer Richtung an den Abstützelementen (7) abstützen.

5. Scheiben-/Nabenverbindung nach einem der vorstehenden Ansprüche, dadurch gekennzeichnet, daß die Abstützelemente (7) in radialer Richtung relativ zu den Zwischenelementen (9) verschiebbar sind.

6. Scheiben-/Nabenverbindung nach einem der vorstehenden Ansprüche, dadurch gekennzeichnet, daß die Zwischenelemente (9) eine im wesentlichen U-förmige Gestalt aufweisen.

7. Scheiben-/Nabenverbindung nach einem der vorstehenden Ansprüche, dadurch gekennzeichnet, daß die Zwischenelemente (9) derart augestaitet sind, daß sie in radialer Richtung von innen nach außen in den inneren Umfangsbereich der Scheibe einsetzbar sind.

8. Scheiben-/Nabenverbindung nach einem der vorstehenden Ansprüche, dadurch gekennzeichnet, daß die Abstützelemente (7) paarweise angeordnet sind und die Zwischenelemente (9) in Umfangsrichtung umfassen.

9. Scheiben-/Nabenverbindung nach einem der vorstehenden Ansprüche, dadurch gekennzeichnet, daß die Abstützbereiche zwischen den Abstützelementen (7) und den Zwischenelementen (9) im wesentlichen flächenförmig ausgebildet sind.

10. Scheiben-/Nabenverbindung nach einem der vorstehenden Ansprüche, dadurch gekennzeichnet, daß die Zwischenelemente (9) im inneren Bereich Abstützflächen aufweisen, an denen sich die Nocken (8) der Nabe (3) in Umfangsrichtung abstützen.

11. Scheiben-/Nabenverbindung nach einem der vorstehenden Ansprüche, dadurch gekennzeichnet, daß die Abstützelemente (7) Doppelpaare bilden, also Paare in Umfangsrichtung und Paare in axialer Richtung, welche die Zwischenelemente (9) in beiden axialen Richtungen sowie in beiden Umfangsrichtungen umfassen.

12. Scheiben-/Nabenverbindung nach einem der vorstehenden Ansprüche, dadurch gekennzeichnet, daß die Abstützflächen der Zwischenelemente (9) konisch verlaufen.

13. Scheiben-/Nabenverbindung nach einem der vorstehenden Ansprüche, dadurch gekennzeichnet, daß das Zwischenstück aus einem Material mit niedriger Wärmeleitfähigkeit, insbesondere Keramik, besteht.

14. Scheiben-/Nabenverbindung nach einem der vorstehenden Ansprüche, dadurch gekennzeichnet, daß die Zwischenelemente (9) aus einem hochfesten Material, insbesondere Stahl, bestehen.

15. Scheiben-/Nabenverbindung nach einem der vorstehenden Ansprüche, dadurch gekennzeichnet, daß die Zwischenelemente (9) Abschnitte einer Profilstange sind.

16. Scheiben-/Nabenverbindung nach einem der vorstehenden Ansprüche, dadurch gekennzeichnet, daß Nabe (3) und Scheibe (2) aus verschiedenen Materialien bestehen.

17. Scheiben-/Nabenverbindung nach eine der vorstehenden Ansprüche, dadurch gekennzeichnet, daß die Nabe (3) als Tiefziehteil ausgeführt ist.

## Claims

1. Disc-hub connection (1) for connecting a brake disc (2) to a hub (3), in particular for utility vehicle disc brakes, wherein
a) in the inner circumferential region the brake disc (2) has support elements (7) which protrude radially inwards,
b) on the outer circumferential region the hub (3) has cams (8) which protrude radially outwards, and wherein
c) intermediate elements (9) for the transmission of torque and force from the cams (8) of the hub (3) to the support elements (7) of the disc (2) are designed in such a way that the cams (8) of the hub (3) engage into the intermediate elements (9).

2. Disc-hub connection according to claim 1, characterised in that the intermediate elements (9) engage into the support elements (7) and are supported on the support elements (7) in the circumferential direction using positive engagement.

3. Disc-hub connection according to claim 1 or 2, characterised in that the cams (8) are connected to the intermediate elements (7) using positive engagement or a force fit.

4. Disc-hub connection according to one of the preceding claims, characterised in that the intermediate elements (9) have lateral projections (10, 11) which are supported on the support elements (7) in the axial direction.

5. Disc-hub connection according to one of the preceding claims, characterised in that the support elements (7) can be moved in the radial direction relatively to the intermediate elements (9).

6. Disc-hub connection according to one of the preceding claims, characterised in that the intermediate elements (9) have a substantially U-shaped design.

7. Disc-hub connection according to one of the preceding claims, characterised in that the intermediate elements (9) are designed in such a way that they can be inserted in the radial direction from the inside to the outside into the inner circumferential region of the disc.

8. Disc-hub connection according to one of the preceding claims, characterised in that the support elements (7) are arranged in pairs and enclose the intermediate elements (9) in the circumferential direction.

9. Disc-hub connection according to one of the preceding claims, characterised in that the support areas between the support elements (7) and the intermediate elements (9) are of substantially planar construction.

10. Disc-hub connection according to one of the preceding claims, characterised in that the intermediate elements (9) have support surfaces in the inner region on which the cams (8) of the hub (3) are supported in the circumferential direction.

11. Disc-hub connection according to one of the preceding claims, characterised in that the support elements (7) form double pairs, that is pairs in the circumferential direction and pairs in the axial direction, which enclose the intermediate elements (9) in both axial directions and in both circumferential directions.

12. Disc-hub connection according to one of the preceding claims, characterised in that the support surfaces of the intermediate elements (9) extend conically.

13. Disc-hub connection according to one of the preceding claims, characterised in that the intermediate piece comprises a material with low heat conductivity, in particular ceramics.

14. Disc-hub connection according to one of the preceding claims, characterised in that the intermediate elements (9) are made of a high-strength material, in particular steel.

15. Disc-hub connection according to one of the preceding claims, characterised in that the intermediate elements (9) are sections of a profiled rod.

16. Disc-hub connection according to one of the preceding claims, characterised in that the hub (3) and the disc (2) are made of different materials.

17. Disc-hub connection according to one of the preceding claims, characterised in that the hub (3) is constructed as a deep-drawing part.

## Revendications

1. Jonction (1) disque-moyeu destiné à la jonction d'un disque (2) de frein à un moyeu (3) notamment pour des freins de véhicules utilitaires dans laquelle
a) le disque (2) de frein comporte dans la partie périphérique intérieure des éléments (7) d'appui qui font saillie radialement vers l'intérieur,
b) le moyeu (3) comporte dans la partie périphérique extérieure des saillies (8) qui font saillie radialement vers l'extérieur, et
c) des éléments (9) intermédiaires de transmission du couple de rotation et de la force des saillies (8) du moyeu (3) aux éléments (7) d'appui du disque (2) sont conformés de façon que les saillies (8) du moyeu (3) pénètrent dans les éléments (9) intermédiaires.

2. Jonction disque-moyeu suivant la revendication 1, caractérisée en ce que les éléments (9) intermédiaires pénètrent dans les éléments (7) d'appui et s'appuient avec complémentarité de forme dans la direction périphérique sur les éléments (7) d'appui.

3. Jonction disque-moyeu suivant la revendication 1 ou 2, caractérisée en ce que les saillies (8) sont reliées par complémentarité de forme et/ou par coopération de force aux éléments (7) intermédiaires.

4. Jonction disque-moyeu suivant l'une des revendications précédentes, caractérisée en ce que les éléments (9) intermédiaires comportent des parties (10, 11) latérales en saillie qui s'appuient en direction axiale sur les éléments (7) d'appui.

5. Jonction disque-moyeu suivant l'une des revendications précédentes, caractérisée en ce que les éléments (7) d'appui peuvent coulisser en direction radiale par rapport aux éléments (9) intermédiaires.

6. Jonction disque-moyeu suivant l'une des revendications précédentes, caractérisée en ce que les éléments (9) intermédiaires ont une forme sensiblement en U.

7. Jonction disque-moyeu suivant l'une des revendications précédentes, caractérisée en ce que les éléments (9) intermédiaires sont conformés de manière à pouvoir être mis en direction radiale de l'intérieur vers l'extérieur dans la partie périphérique intérieure du disque.

8. Jonction disque-moyeu suivant l'une des revendications précédentes, caractérisée en ce que les éléments (7) d'appui sont disposés par paire et entourent les éléments (9) intermédiaires dans la direction périphérique.

9. Jonction disque-moyeu suivant l'une des revendications précédentes, caractérisée en ce que les zones d'appui entre les éléments (7) d'appui et les éléments (9) intermédiaires sont sensiblement de forme plane.

10. Jonction disque-moyeu suivant l'une des revendications précédentes, caractérisée en ce que les éléments (9) intermédiaires comportent dans la partie intérieure des faces d'appui sur lesquelles s'appuient en direction périphérique les saillies (8) du moyeu (3).

11. Jonction disque-moyeu suivant l'une des revendications précédentes, caractérisée en ce que les éléments (7) d'appui forment des paires doubles, donc des paires dans la direction périphérique et des paires dans la direction axiale qui entourent les éléments (9) intermédiaires dans les deux sens axiaux ainsi que dans les deux sens périphériques.

12. Jonction disque-moyeu suivant l'une des revendications précédentes, caractérisée en ce que les surfaces d'appui des éléments (9) intermédiaires sont coniques.

13. Jonction disque-moyeu suivant l'une des revendications précédentes, caractérisée en ce que la pièce intermédiaire est en un matériau de petite conductivité thermique notamment en céramique.

14. Jonction disque-moyeu suivant l'une des revendications précédentes, caractérisée en ce que les éléments (9) intermédiaires sont en un matériau très résistant notamment en acier.

15. Jonction disque-moyeu suivant l'une des revendications précédentes, caractérisée en ce que les éléments (9) intermédiaires sont des tronçons d'une barre profilée.

16. Jonction disque-moyeu suivant l'une des revendications précédentes, caractérisée en ce que le moyeu (3) et le disque (2) sont en des matériaux différents.

17. Jonction disque-moyeu suivant l'une des revendications précédentes, caractérisée en ce que le moyeu (3) est une pièce obtenue par emboutissage profond.
